# EUROPÄISCHE PATENTSCHRIFT

(11) **EP 0 924 680 B1**
(45) Veröffentlichungstag und Bekanntmachung des Hinweises auf die Patenterteilung: **30.06.2004**
(21) Anmeldenummer: 98121309.3
(22) Anmeldetag: 09.11.1998
(51) Int. Cl.: G09F 27/00, B64F 1/00, G08C 17/02

(54) **Lotsensystem für Fluggäste**
Guiding system for air passengers
Système pour guider les passagers d'avions

(30) Priorität: 18.12.1997 DE 29722342 U
(43) Veröffentlichungstag der Anmeldung: 23.06.1999
(73) Patentinhaber: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(56) Entgegenhaltungen:
- DE-A- 3 932 550
- DE-A- 4 314 286

## Beschreibung

Die Erfindung bezieht sich auf ein Lotsensystem für Fluggäste in Flughäfen mit einer Vielzahl untereinander über Gänge und Wege verbundener Flugsteige, sog. Gates, und einer Anzahl mehr oder minder zentral angeordneter Abfertigungseinrichtungen sowie Ankunfts-und Abflughalle mit Ladengeschäften und Restaurants und dergl. Versorgungseinrichtungen, und einer mit einer Anzahl von Einrichtungen zur individuellen Eingabe von einzelnen persönlichen Zielvorgaben ausgestatteten Wegweisung mittels Hinweistafeln und dergl. schriftliche Informationen enthaltenden Informationsträgern.

Mit zunehmender Nutzung des Flugzeuges als Reisetransportmittel und damit zunehmendem Flugverkehr werden notwendigerweise auch die Flughafenanlagen immer weitläufiger und damit zumindest auch für den weniger erfahrenen Fluggast unübersichtlicher. Zwar sind Flughäfen im allgemeinen mit einer hinreichenden Anzahl von Informationstafeln zur Wegweisung ausgestattet, jedoch erfordert deren Studium in vielen Fällen einerseits gewisse Sprachkenntnisse, welche nicht immer vorhanden sind und zum anderen einen manchmal, insbesondere im zentralen Bereich der Flughafenanlage wegen der Fülle der angezeigten Informationen nicht unbeträchtlichen Zeitaufwand erfordern. Im Fernflugverkehr kommt zu alledem noch, daß in verschiedenen Gegenden der Welt unterschiedliche Schriftzeichen verwendet werden, so daß sich ein weder der Sprache noch der Schriftzeichen des Landes kundiger Fluggast bei der Suche nach seinem Flugsteig, insbesondere dann wenn er ohnehin in Eile ist, vor erhebliche Probleme gestellt sieht.
Es besteht daher ein Bedürfnis nach einer möglichst individuellen Führung des Fluggastes vom Abfertigungsschalter zum Flugsteig.

Neben der sicheren Wegweisung zum zutreffenden Flugsteig kann für den einzelnen Fluggast auch noch die Übermittlung sonstiger Informationen, insbesondere die Übermittlung von wissenswerten Informationen über die momentanen oder zumindest die bei seiner Ankunft zu erwartenden Verhältnisse am Zielort von Interesse sein.
Es sind zwar aus der DE-OS 43 14 286, insbesondere für andere, vorzugsweise zwangsgeldfinanzierte Massenabfertigungseinrichtungen, wie moderne Krankenhäuser und dergl. Anstalten bereits Vorrichtungen zur Zielführung von Personen oder Patienten bekannt, welche an Wegverzweigungen oder Kreuzungen angeordnete Einrichtungen zur Richtungsweisung und in Verbindung mit diesen Eingabeeinheiten zur Eingabe von Zielinformationen bzw. Zielkennzeichnungen umfassen, derart, daß nach Eingabe eines eine Zielvorgabe bzw. Zielkennzeichnung markierenden Codes bzw. einer sonstigen Kennung an einer Zielführungseinrichtung an einer zugehörigen Wegweisereinheit die Anzeige des zu verfolgenden Weges bzw. der einzuschlagenden Richtung erscheint. Die Kennung wird dabei als Barcode auf einem Datenträger gespeichert, mit der Folge, daß der den Barcode tragende Datenträger an jeder Wegverzweigung in den dort ortsfest aufgestellten Barcodeleser eingeführt werden muß um eine weitere Wegweisung zuerhalten.

Aus der DE-OS 39 32 550 ist ein Lotsensystem für Fluggäste in Flughäfen mit einer Vielzahl untereinander über Gänge und Wege verbundener Flugsteige, sog. Gates, und einer Anzahl mehr oder minder zentral angeordneter Abfertigungseinrichtungen sowie einer Ankunfts-und Abflughalle mit Ladengeschäften und Restaurants und dergl. Versorgungseinrichtungen und einer Wegweisung durch Hinweistafeln und dergl. schriftliche Informationen enthaltenden Informationsträgernbekannt, wobei den Fluggästen Schubgepäckwagen zur Beförderung ihres Gepäckes angeboten werden, und wobei zur Lenkung bzw. Information der Fluggäste einerseits über die Fläche der Anlage hin verteilt eine Vielzahl von Sendestationen angeordnet ist und andererseits die Schubgepäckwagen jeweils mit einem mittels einer Einrichtung zur Eingabe einer Zielvorgabe einschaltbaren, zumindest optische Signale zur Wegweisung vermittelnden Empfänger, insbesondere einem Wegweisungssymbole aufzeigenden Display ausgestattet sind.

Der Erfindung liegt somit die Aufgabe zugrunde ein für Flughafenanlagen geeignetes Lotsensystem zu schaffen, welches es gestattet eine Vielzahl von Fluggästen mehr oder minder gleichzeitig und unabhängig davon ob jeder einen Schubgepäckwagen mit sich führt oder nicht auf kürzestem Weg und damit in kürzester Zeit vom Abfertigungsschalter zum Flugsteig zu leiten, ohne Rücksicht darauf, ob der Fluggast hinreichende Sprachkenntnisse zum Lesen der auf der Anlage vorhandenen Anzeigetafel und Informationsträger verfügt oder nicht.

Diese Aufgabe wird erfindungsgemäß im Wesentlichen dadurch gelöst, daß jeder Fluggast bei der Abfertigung in der Abfertigungseinrichtung einen mittels Sender/Empfängerstationen berührungslos fernabfragbaren Datenträger mit einer Kennzeichnung seines Zieles erhält und an jeder Abzweigung eine Abfragestation und eine individuell wegweisende Anzeigestation angeordnet ist,wobei die dem Fluggast bei der Abfertigung ausgehändigte, abfragbare Kennzeichnung seines Zieles auf einem Transponder gespeichert und der Transponder an einer Anheftvorrichtung zum Anstecken nach Art bekannter und gebräuchlicher Namensschilder an Kleidungsstücke ausgestattet ist. Da Reisende jedoch in vielen Fällen auch ein mehr oder minder umfangreiches mit sich führen und sich dabei zur Erleichterung des Transportes ihres Gepäckes eines Schubgepäckwagens, wie sie auf Flughäfen üblicherweise bereit gehalten werden, bedienen, kann wahlweise vorgesehen sein, daß der Transponder mit einer Einrichtung zum Befestigen an einem Schubgepäckwagen versehen ist.

Im Hinblick darauf, daß ein modernes verkehrsflugzeug jeweils hunderte von Passagieren befördert und die Abflugzeiten gestaffelt sind, kann in der Praxis davon ausgegangen werden, daß es nicht erforderlich ist nun grundsätzlich jedem Fluggast ein Hilfsmittel zur Wegweisung zur Verfügung zu stellen, so daß die Anzahl derjenigen Fluggäste, welche mit einem abfragbaren Datenträger ausgestattet werden im Verhältnis zur Gesamtzahl der innerhalb der Flughafenanlage befindli chen Fluggäste vergleichsweise gering ist. Aus diesem Umstand resultiert naturgemäß, daß die Anzahl von Fluggästen die gleichzeitig oder in geringsten Zeitabständen in den Abfragebereich einer Sender-/Empfängerstation gelangen hinreichend gering ist, um jedem Fluggast innerhalb derjenigen Zeit, welche er zum Durchschreiten des Reichweitenbereiches der Sender-/Empfängerstation benötigt, einen gezielten individuell wegweisenden Hinweis auf sein Ziel bzw. den gesuchten Flugsteig zu übermitteln.
Um eine lückenlose Leitung des jeweiligen Fluggastes zu dem für seinen Flug zuständigen Flugsteig zu gewährleisten ist zweckmäßigerweise vorgesehen, daß an allen Abzweigungen oder Kreuzungen von Wegen bzw. Gängen der Anlage Informationstafeln angebracht sind, welche neben der auf ihnen enthaltenen, gegebenenfalls variablen schriftlichen Information wenigstens ein durch einen abfragbaren Datenträger individuell ansteuerbares Anzeigefeld mit Zielkennzeichnung und Richtungspfeil aufweisen. Da bei dem erfindungsgemäßen Lotsensystem die Wegweisungen jeweils individuell für jeden Fluggast ausgegeben werden, wird dem Fluggast der Wegweisungshinweis auch dann vermittelt, wenn er lediglich seine bisherige Richtung beibehalten soll. Damit werden Unsicherheiten bezüglich des einzuschlagenden Weges, wie sie häufig dann auftreten, wenn Wegweisungen nur dann erfolgen wenn der Fluggast eine Richtungsänderung vorzunehmen hat, ausgeschlossen.

Zur Realisierung dieser lückenlosen Wegweisung ist vorgesehen, daß jede der innerhalb der Flughafenanlage vorhandenen Informationstafeln mit einer Sender/Empfängerstation zur Abfrage der vom Fluggast mitgeführten und abfragbaren Kennzeichnung zumindest seines Zieles, vorzugsweise aber auch der Flugnummer und seiner Nationalität des ausgestattet ist.

Hinsichtlich der Organisation der Anzeige der Wegweisung kann vorgesehen sein, daß jede der Informationstafeln mit einer Anzahl von Anzeigen ausgestattet ist, welche in einen Speicher abgelegt sind und in Abhängigkeit z.B. von Flugnummer, gegebenenfalls auch Flugziel, abrufbaren Informationsanzeige, z.B. Richtungspfeil und Zielortangabe, bezüglich des Weges zum zugehörigen Flugsteig enthalten. Dies dürfte insbesondere in solchen Fällen vorteilhaft sein, wo beispielsweise Linienflüge oder aber auch Charterflüge nach bestimmten Zielorten jeweils vom gleichen oder zumindest von benachbarten Flugsteigen abgehen. Dabei besteht ein besonderer Vorteil einer lückenlosen Wegweisung darin, daß im Speicher der jeweiligen Anzeigetafel lediglich eine begrenzte Anzahl von Ortsbezeichnungen, gegebenenfalls auch Flugnummern gespeichert sein müssen und daß es dann genügt einer gegebenen Ortsbezeichnung einen entsprechenden Richtungspfeil zuzuordnen. Dabei kann naturgemäß auch vorgesehen sein, daß die Ortsbezeichnungen in verschiedenen Schriftzeichen dargestellt werden, je nach der Nationalität, welcher der jeweilige Fluggast angehört.

Es kann aber auch oder insbesondere zusätzlich vorgesehen sein, daß jede der Informationstafeln ein Anzeigefeld enthält, welches an einen Zentralcomputer angeschlossen ist, welcher eine Weg Richtungsanzeige in Abhängigkeit von Flugnummer, gegebenenfalls auch Flugziel ansteuert bzw. ausgibt. im Unterschied zur vorstehend angegebenen Speicherung einer gewissen Anzahl von Richtungsanzeigen innerhalb eines Speichers der jeweiligen Informationstafel erfordert eine Anbindung der bzw. jeder Informationstafel an einen Zentralkomputer ein hierfür geeignetes Leitungssystem, bietet dafür aber auch den Vorteil, daß eine größere Variabilität hinsichtlich der möglichen Anzeigen möglich ist.

Unabhängig davon, welche der vorgenannten Möglichkeiten jeweils ausgewählt wird, zeigt das erfindungsgemäße Lotsensystem den jeweiligen Fluggast die einzuschlagende Richtung mittels Pfeil und Zielortangabe bzw. Flugnummerangabe ausgehend vom Abfertigungsschalter bis zum Flugsteig an. Die Verwendung des Zielortes als Kriterium für die Richtungswegweisung hat zugleich den Vorteil, daß mehreren gleichzeitig bzw. in sehr kurzen Zeitabständen in den Reichweitenbereich einer Abfragestation gelangenden Fluggästen mit gleichem Reiseziel eine gemeinsame Information vermittelt werden kann. Es kann daher davon ausgegangen werden, daß mit zunehmender Annäherung an den Ziel-Flugsteig immer mehr Fluggäste mit gleichem Reiseziel mit einer gemeinsamen und damit früh erfolgenden Wegweisung geleitet werden. Beispielsweise können in loser Reihenfolge eine erste Anzahl von Fluggästen mit einem Reiseziel A und eine Anzahl von Fluggästen mit einem Reiseziel B in den Reichweitenbereich einer Sender/Empfängerstation gelangen und daher gemeinsam jeweils den Richtungspfeil zu ihrem Flugsteig angezeigt bekommen.

In weiterer Ausgestaltung des erfindungsgemäßen Lotsensystemes kann ferner vorgesehen sein, daß auf dem Transponder ein zusätzlicher Datensatz gespeichert ist, welcher besondere Werbeanzeigen, beispielsweise Hinweisanzeigen für am Flugziel zu besuchende Attraktionen oder dergl. ansteuern kann. Dabei ist unter Hinweisanzeigen nicht nur reine Werbung zu verstehen, es können in diesem Zusammenhang auch sonstige für den Fluggast wichtige Informationen, z.B. über außergewöhnliche Zustände, wie beispielsweise Streiks der Verkehrsmittelbetriebe oder aber auch besondere Feiertage am Zielort ausgegeben werden. Solche Hinweisanzeigen können zweckmäßigerweise der vorletzten und/oder der letzten Anzeige vor dem dem jeweiligen Zielort zugeordneten Flugsteig vorbehalten bleiben. Dies kann in vorteilhafter Weise zu einer einheitlichen Größe sämtlicher innerhalb der Flughafenanlage vorhandenen Informationstafeln führen, da mit zunehmendem Abstand der jeweiligen Informationstafel vom Zentralbereich die Menge der anzuzeigenden flughafentechnischen Informationen abnimmt und daher mehr und mehr Raum für die Übermittlung sonstiger Informationen verbleibt.

Im zentralen Bereich, wo einerseits in rascher Folge oder gleichzeitig eine Vielzahl von Einzelanzeigen bzw. Einzelinformationen auszugeben sind, andererseits aber im Hinblick auf feststehende Abflugzeiten jeweils auch eine Vielzahl von Fluggästen das gleiche Ziel hat, reichen die normalen Informationstafeln bzw. Anzeigetafeln mit Sicherheit nicht aus, um jedem Fluggast innerhalb einer vertretbaren Zeitspanne und individuell eine optische Richtungsweisung zukommen zu lassen. In solchen Bereichen sieht eine Weiterbildung der Erfindung daher vor, daß der Häufigkeit der aufgefangenen Abfragesignale entsprechend abgestuft Hauptrichtungspfeile oder sonstige Hinweise auf Haupt-richtungen wechselweise aufeinanderfolgend aufblinken sollen, beispielsweise derart, daß Pfeil und Zielort a für 2 Sekunden, im Wechsel mit Pfeil und Zielort b für drei Sekunden und dieser im weiteren Wechsel mit Pfeil und Zielort c für wiederum zwei Sekunden aufblinkt. Eine dieserart aufgebaute Wegweisung ermöglicht es im zentralen Bereich der Flughafenanlage eine Vielzahl von Wegweisungen zu vermitteln, ohne daß sich der Fluggast in der herkömmlichen Weise jedesmal durch lange Listen von Zilenagaben durchlesen muß.

Die Erfindung ist in der nachfolgenden Beispielsbeschreibung anhand eines in der Zeichnung dargestellten Ausführungsbeispieles im Einzelnen beschrieben. In der Zeichnung zeigt die
- Figur 1: eine schematische Grundrißdarstellung einer Flughafenanlage;
- Figur 2: eine schematische Darstellung einer in der Nähe des Zentralbereiches der Flughafenanlage befindlichen Informationstafel mit individueller wegweisender Information;
- Figur 3: eine schematische Darstellung einer in der Nähe des Zielflugsteiges der Flughafenanlage befindlichen Informationstafel mit individueller wegweisender Information;
- Figur 4: eine mehr oder minder schematische Darstellung der Anordnung einer Informationstafel zugeordneten Sender-/Empfängereinheit;
- Figur 5: eine schematische Darstellung des Ablaufes einer Wegweisung;
- Figur 6: eine schematische Darstellung der vertikalen Reichweite einer stationären Sender-/Empfängeranlage;
- Figur 7: eine schematische Darstellung der horizonalen Reichweite einer stationären Sender-/Empfängeranlage.

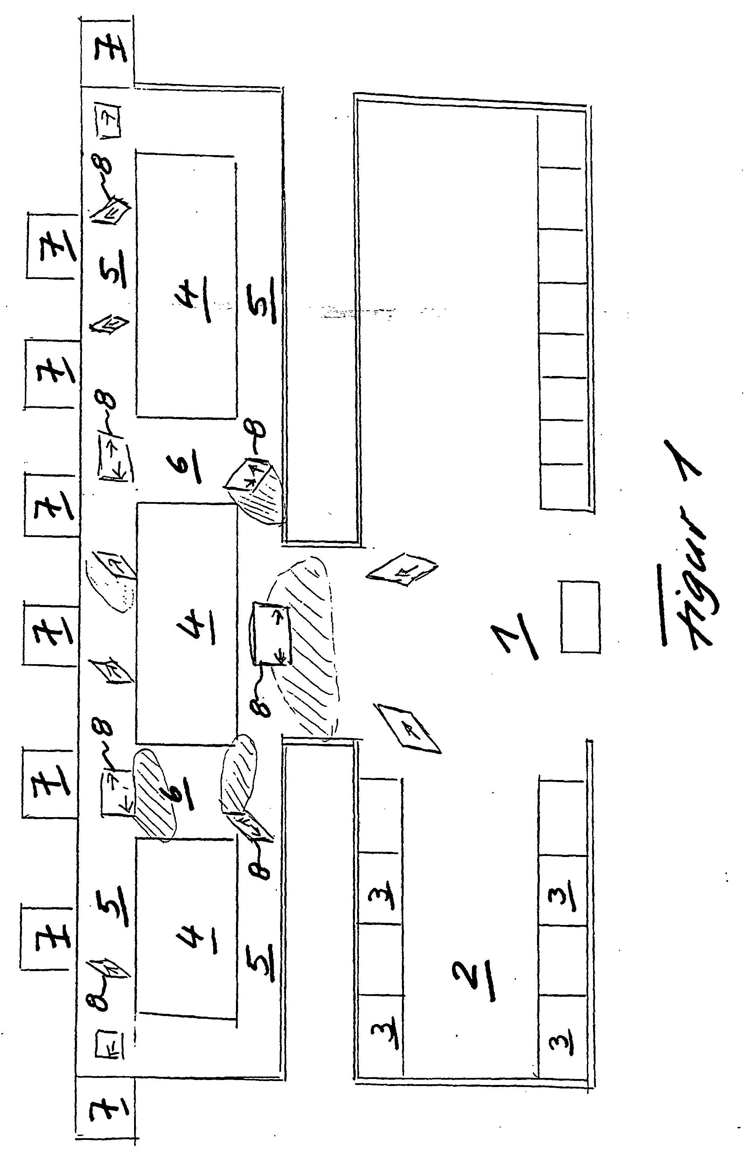

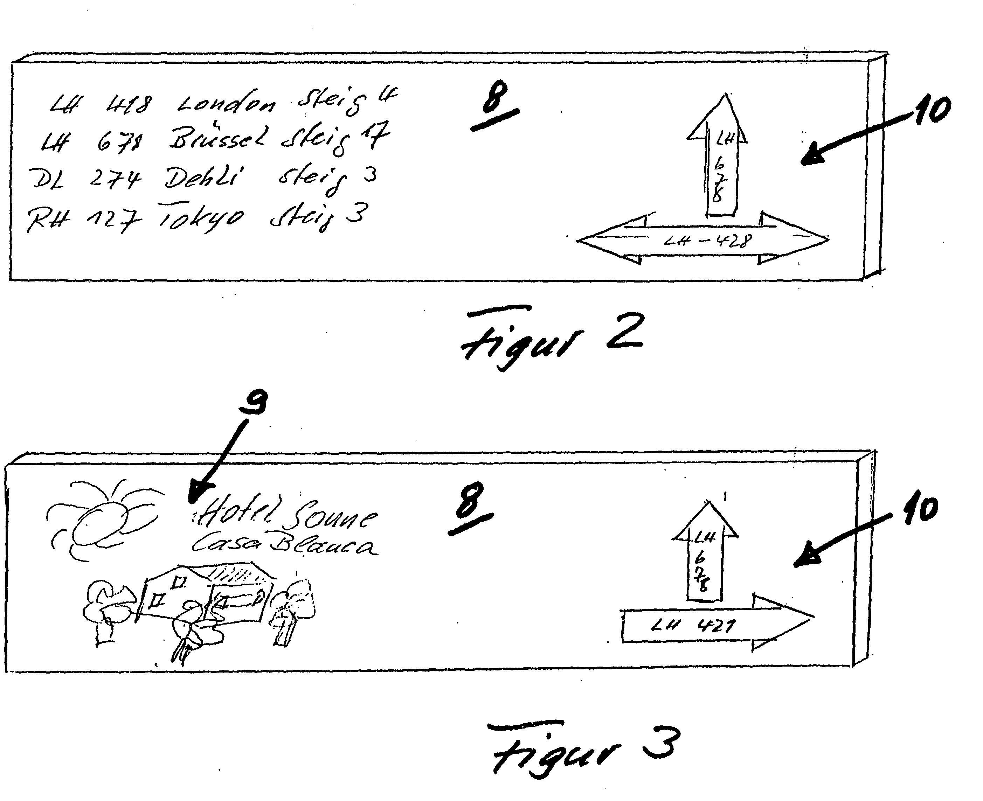

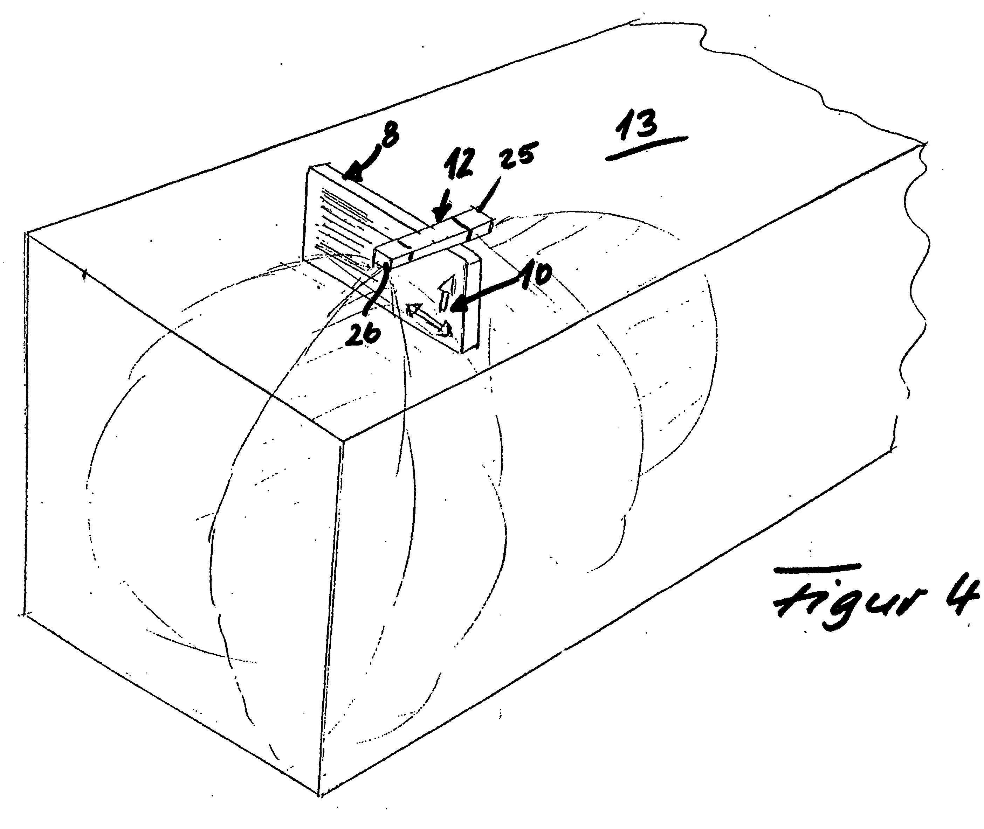

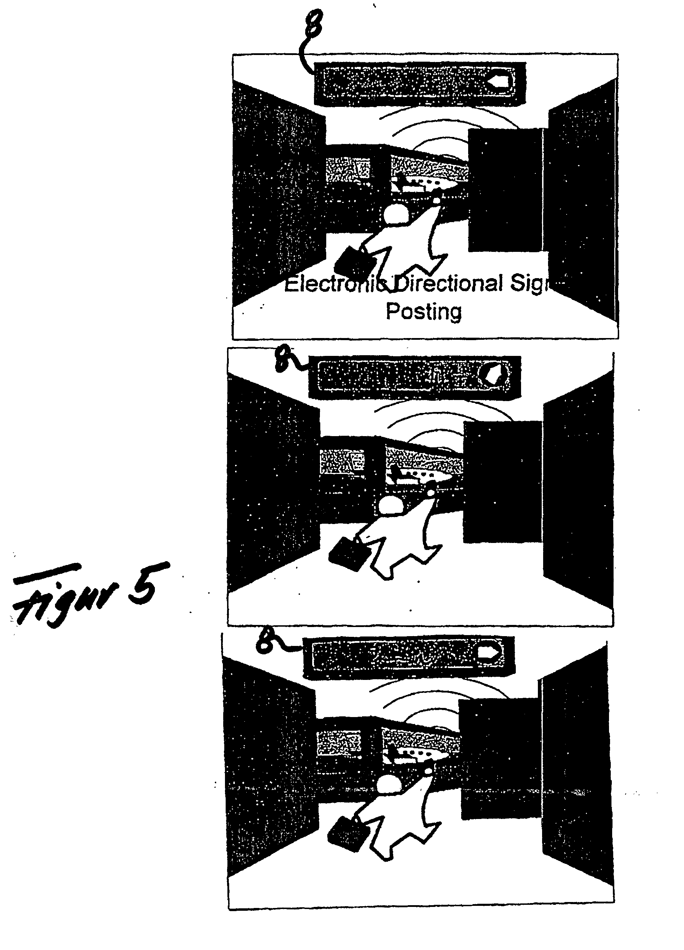

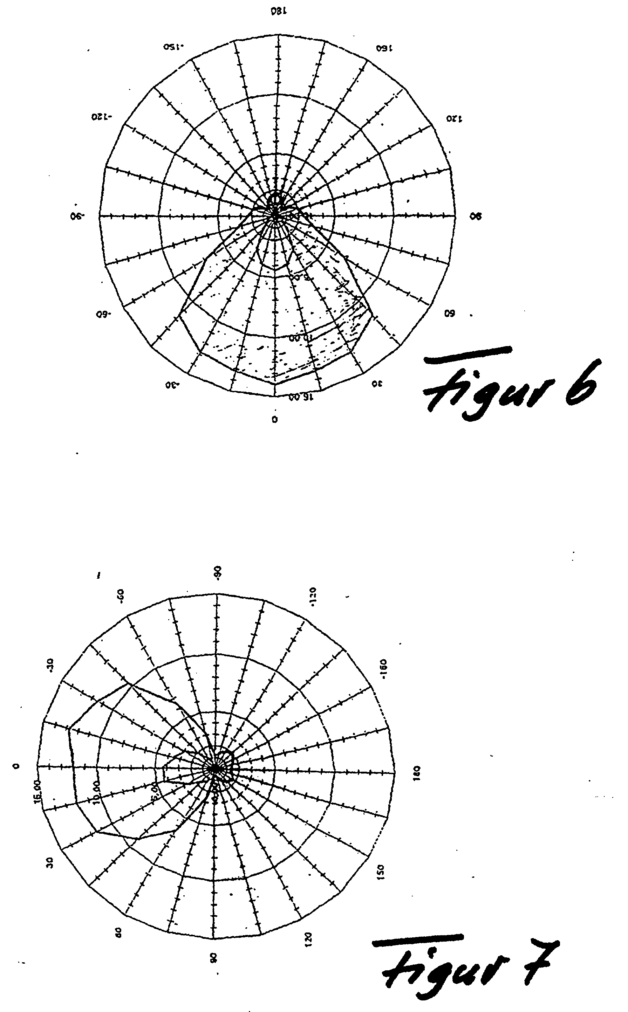

Die in der Figur 1 vereinfacht und schematisch angedeutete Flughafenanlage umfaßt beispielsweise einen Zentralbereich 1 in dessen Abflughalle 2 eine Vielzahl von Abfertigungsschaltern 3 untergebracht ist und in welcher sich ferner Ladengeschäfte und Restaurants 4 befinden. Die Flughafenanlage umfaßt ferner mit einer Vielzahl untereinander über Gänge 5 und Wege 6 verbundener und bezüglich des Zentralbereiches 1 peripher angeordneter Flugsteige 7, sog. Gates. Ausgehend von den Abfertigungsschaltern 3 bzw. ihrem Zentralbereich 1 sind in der Flughafenanlage an allen Abzweigungen bzw. Kreuzungen der Gänge 5 und der Wege 6 Informationstafeln 8 angeordnet, welche Informationen über die Lage der einzelnen Flugsteige 7 bzw. den zum Erreichen eines bestimmten Flugsteiges zu beschreitenden Weg vermitteln sollen. Die dem Zentralbereich 1 nächstliegenden Informationstafeln 8 enthalten dabei, wie insbesondere in der Figur 2 angedeutet, eine Vielzahl von Informationen bezüglich der Lage der verschiedenen Flugsteige 7 während die Informationstafeln 8 mit zunehmendem Abstand zum Zentralbereich 1, wie insbesondere in der Figur 3 angedeutet, immer weniger Informationen über die Lage von Flugsteigen enthalten, und bei einheitlicher Größe nunmehr Raum für die Darstellung von Werbeinformationen 9 oder aber für Sachinformationen über den Zielort des Fluges bieten. Unabhängig von ihrem jeweiligen Standort weist jede Informationstafel 8 ein Feld 10 auf, welches der individuellen Wegweisung für Fluggäste gewidmet ist. Im Zuge ihrer Abfertigung am Abfertigungsschalter können die Fluggäste auf Wunsch einen berührungslos fernabfragbaren Datenträger, insbesondere einen Transponder 11 erhalten, auf welchem abfragbare Datensätze gespeichert sind, welche Auskünfte über das Reiseziel, insbesondere den Zielort, und die Nationalität des Fluggastes sowie die Flugnummer enthalten. Den einzelnen Informationstafeln 8 sind als Abfragestationen mit den Transpondern korrespondierende Sender-/Empfängereinheiten 12 zugeordnet, welche die auf den Transpondern gespeicherten Daten erkennen und in ein Steuersignal für die Informationstafeln 8 zur Ausgabe einer individuellen Anzeige der zur Erreichung des gewünschten Flugsteiges einzuhaltenden Richtung und der Flugnummer und/oder des Zielortes im Feld 10 umwandeln. Die den einzelnen Informationstafeln 8 zugeordneten Sender-/Empfängereinheiten sind, wie in der Figur 4 schematisch dargestellt an der Gebäude-bzw. Raumdecke 13 angeordnet und haben einen begrenzten vertikalen und horizontalen Reichweitenbereich.
Im zentralen Bereich, wo einerseits in rascher Folge oder gleichzeitig eine Vielzahl von Einzelanzeigen bzw. Einzelinformationen auszugeben sind, andererseits aber im Hinblick auf feststehende Abflugzeiten jeweils auch eine Vielzahl von Fluggästen das gleiche Ziel hat, reichen die normalen Informationstafeln bzw. Anzeigetafeln mit Sicherheit nicht aus, um jedem Fluggast innerhalb einer vertretbaren Zeitspanne und individuell eine optische Richtungsweisung zukommen zu lassen. In solchen Bereichen sieht eine Weiterbildung der Erfindung daher vor, daß der Häufigkeit der aufgefangenen Abfragesignale entsprechend abgestuft Hauptrichtungspfeile oder sonstige Hinweise auf Hauptrichtungen wechselweise aufeinanderfolgend aufblinken sollen, beispielsweise derart, daß Pfeil und Zielort a für 2 Sekunden, im Wechsel mit Pfeil und Zielort b für drei Sekunden und dieser im weiteren Wechsel mit Pfeil und Zielort c für wiederum zwei Sekunden aufblinkt. Eine dieserart aufgebaute Wegweisung ermöglicht es im zentralen Bereich der Flughafenanlage eine Vielzahl von Wegweisungen zu vermitteln, ohne daß sich der Fluggast in der herkömmlichen Weise jedesmal durch lange Listen von Zielangaben und weghinweisen durchlesen muß, wie dies in der Figur 5 anhand einiger Wegkreuzungen schematisch dargestellt ist. Wie dies insbesondere aus der Darstellung der Figur 4 erkennbar ist weisen die stationären Sender-/Empfängeranlagen 12 jeweils eine Sende- 24 und zwei im gegenseitigen Abstand und mit entgegengesetzter Ausrichtung montierte Empfangsantennen 25 und 26 auf und sind und derart an der Raumdecke 13 eines Ganges 5 oder Weges 6 montiert sind, daß jede der Emfangsantennen 25 bzw. 26 einer der beiden möglichen Bewegungsrichtungen eines Fluggastes zugeordnet ist. Diese doppelseitige Anordnung gerichteter Antennen der Sender-/Empfängeranlagen 12 ermöglicht es einen möglicherweise in die falsche Richtung eilenden Fluggast zu erkennen und gegebenenfalls zur Umkehr zu bewegen.

## Patentansprüche

1. Lotsensystem für Fluggäste in Flughäfen mit einer Vielzahl untereinander über Gänge und Wege verbundener Flugsteige, sog. Gates, und einer Anzahl mehr oder minder zentral angeordneter Abfertigungseinrichtungen sowie Ankunfts-und Abflughalle mit Ladengeschäften und Restaurants und dergl. Versorgungseinrichtungen, und die mit einer Wegweisung durch Hinweistafeln und dergl. schriftliche Informationen enthaltenden Informationsträgern ausgestattet sind
**dadurch gekennzeichnet,**
**daß** jeder Fluggast bei der Abfertigung in der Abfertigungseinrichtung einen mittels Sender-/Empfängerstationen berührungslos fernabfragbaren Datenträger mit einer Kennzeichnung seines Zieles erhält und an jeder Abzweigung eine Abfragestation und eine individuell wegweisende Anzeigestation angeordnet ist,wobei die dem Fluggast bei der Abfertigung ausgehändigte, abfragbare Kennzeichnung seines Zieles auf einem Transponder gespeichert und der Transponder an einer Anheftvorrichtung zum Anstecken nach Art bekannter und gebräuchlicher Namensschilder an Kleidungsstücke ausgestattet ist.

2. Lotsensystem nach Anspruch 1, **dadurch gekennzeichnet, daß** an allen Abzweigungen oder Kreuzungen von Wegen bzw. Gängen der Anlage angebrachte Informationstafeln neben der auf ihnen enthaltenen, gegebenenfalls variablen schriftlichen Information wenigstens ein individuell ansteuerbares Anzeigefeld mit Zielkennzeichnung und Richtungspfeil aufweisen.

3. Lotsensystem nach Anspruch 1 und 2, **dadurch gekennzeichnet, daß** jede der Informationstafeln mit einer Sender-/Empfängerstation zur Abfrage der vom Fluggast mitgeführten Kennzeichnung seines Zieles ausgestattet ist.

4. Lotsensystem nach Anspruch 1 bis 3, **dadurch gekennzeichnet, daß** jede der Informationstafeln mit einer Anzahl von Anzeigen ausgestattet ist, welche einen Speicher mit in Abhängigkeit von Flugnummer, gegebenenfalls auch Flugziel abrufbaren Informationsanzeigen, z.B. Richtungspfeil, bezüglich des Weges zum zugehörigen Flugsteig enthalten.

5. Lotsensystem nach Anspruch 1 bis 4, **dadurch gekennzeichnet, daß** jede der Informationstafeln ein Anzeigefeld enthält, welches an einen Zentralcomputer angeschlossen ist, welcher eine Weg Richtungsanzeige in Abhängigkeit von Flugnummer, gegebenenfalls auch Flugziel ansteuert bzw. ausgibt.

6. Lotsensystem nach Anspruch 1 bis 5, **dadurch gekennzeichnet, daß** der Transponder mit einer Einrichtung zum Befestigen an einem Schubgepäckwagen versehen ist.

7. Lotsensystem nach Anspruch 1 bis 6, **dadurch gekennzeichnet, daß** auf dem Transponder ein zusätzlicher Datensatz gespeichert ist, welcher besondere Werbeanzeigen, beispielsweise Hinweisanzeigen für am Flugziel zu besuchende Attraktionen oder dergl., ansteuert.

8. Lotsensystem nach Anspruch 1 bis 7, **dadurch gekennzeichnet, daß** sämtliche innerhalb der Flughafenanlage vorhandene Informationstafeln untereinander gleich groß gestaltet sind.

9. Lotsensystem nach Anspruch 1 bis 8 **dadurch gekennzeichnet, daß** die der Abfrage der Transponder zugeordneten Sender-/Empfängerstationen jeweils an der Gebäudedecke installiert sind.

10. Lotsensystem nach Anspruch 1 bis 9, **dadurch gekennzeichnet, daß** in den zentralen Bereichen der Flughafenanlage an den Informationstafeln der Häufigkeit der aufgefangenen Abfragesignale entsprechend abgestuft Hauptrichtungspfeile oder sonstige Hinweise auf Hauptrichtungen wechselweise aufeinanderfolgend aufblinken.

## Claims

1. Guiding system for air passengers in airports with a large number of passenger ramps, so-called gates, connected to one another by gangways and corridors, and a number of more or less centrally arranged check-in systems and an arrival and departure lounge with shops and restaurants and similar supply outlets, and which are equipped with sign-posting by information boards and similar information providers containing written information, **characterised in** each air passenger receives during checking-in in the check-in system a data carrier with an identification of his destination which can be scanned without contact by means of transmitter/receiver stations and a scanning station and an individual direction-indicating display station is arranged at each branch point, the destination identification which can be scanned and was handed out to the air passenger during checking-in being stored on a transponder and the transponder being equipped with a fastening device for pinning on items of clothing in the manner of known and conventional name badges.

2. Guiding system according to claim 1, **characterised in that** in addition to the optionally variable written information, the information boards, provided at all branch points or intersections of the corridors or gangways, also contain at least one individually controllable display field with destination identification and direction arrow.

3. Guiding system according to claims 1 and 2, **characterised in that** each of the information boards is equipped with a transmitter/receiver station for scanning the destination identification carried by the air passenger.

4. Guiding system according to claims 1 to 3, **characterised in that** each of the information boards is equipped with a number of displays containing a memory with information displays which can be called up as a function of the flight number, optionally also the destination, for example a direction arrow with respect to the corridor to the associated passenger ramp.

5. Guiding system according to claims 1 to 4, **characterised in that** each of the information boards contains a display field connected to a central computer which controls and outputs a corridor, direction display as a function of the flight number, optionally also the destination.

6. Guiding system according to claims 1 to 5, **characterised in that** the transponder is provided with a device for fastening to a luggage trolley.

7. Guiding system according to claims 1 to 6, **characterised in that** an additional data record controlling particular advertisements, for example pointers for attractions or the like to be visited at the destination, is stored on the transponder.

8. Guiding system according to claims 1 to 7, **characterised in that** all information boards present within the airport system are of equal size.

9. Guiding system according to claims 1 to 8, **characterised in that** the transmitter/receiver stations associated with scanning of the transponders are each installed on the ceiling of the building.

10. Guiding system according to claims 1 to 9, **characterised in that** main direction arrows or other pointers to main directions alternately flash in succession on the information boards in the central regions of the airport installation and are graduated to correspond to the frequency of the scanning signals picked up.

## Revendications

1. Système de guidage des passagers d'avions dans des aérogares comprenant de multiples portes d'embarquement appelées « gates », reliées entre elles par des couloirs ou chemins, un certain nombre de zones d'enregistrement et de contrôle situées plus ou moins au centre, un hall de départ et d'arrivée avec des commerces, des restaurants et d'autres services, et, un dispositif de signalisation constitué de panneaux indicateurs ou ce supports d'information similaires contenant des informations écrites, **caractérisé en ce que** chaque passager reçoit lors de l'enregistrement au guichet d'enregistrement un support de données avec un indicateur de sa destination, qui est interrogeable à distance, sans contact, par une station émettrice/réceptrice et que à chaque bifurcation sont prévues une station d'interrogation et une station d'indication individuelle du chemin, la destination interrogeable indiquée au passager lors de l'enregistrement étant mémorisée par un transpondeur qui est monté sur un dispositif de fixation classique à attacher sur le vêtement à la manière d'un patch portant le nom.

2. Système de guidage selon la revendication 1 **caractérisé en ce que** les panneaux d'information installés à toutes les bifurcations ou tous les croisement des chemins ou couloirs à l'intérieur de l'aérogare contiennent, outre des informations écrites, éventuellement variables, au moins un champ de visualisation activable individuellement avec l'indication de la destination et une flèche de direction.

3. Système de guidage selon les revendications 1 et 2 **caractérisé en ce que** chaque panneau d'information est équipé d'une station émettrice/réceptrice pour interroger l'indicateur de destination du passager.

4. Système de guidage selon les revendications 1 à 3 **caractérisé en ce que** chaque panneau d'information équipé d'un certain nombre d'indications comporte une mémoire contenant des informations interrogeables en fonction du numéro du vol, éventuellement de la destination du vol, par exemple une flèche de direction du chemin vers la porte d'embarquement.

5. Système de guidage selon les revendications 1 à 4 **caractérisé en ce que** chaque panneau d'information comporte un champ de visualisation relié à un ordinateur central qui émet, respectivement active, une indication du chemin en fonction du numéro de vol, éventuellement de la destination du vol.

6. Système de guidage selon les revendications 1 à 5 **caractérisé en ce que** le transpondeur est équipé d'un dispositif permettant sa fixation sur un chariot à bagages.

7. Système de guidage selon les revendications 1 à 6 **caractérisé en ce que** la mémoire du transpondeur comporte en outre un jeu de données activant des annonces publicitaires, par exemple des information sur des attractions ou des sites à visiter au lieu de destination.

8. Système de guidage selon les revendications 1 à 7 **caractérisé en ce que** tous les panneaux d'information répartis à l'intérieur de l'aérogare présentent les mêmes dimensions.

9. Système de guidage selon les revendications 1 à 8 **caractérisé en ce que** la station émettrice/réceptrice associée à l'interrogation du transpondeur est installée au plafond du bâtiment.

10. Système de guidage selon les revendications 1 à 9 **caractérisé en ce que** les panneaux d'information agencés dans les zones centrales de l'aérogare comportent des flèches de directions principales graduées en fonction de la fréquence des signaux d'interrogation reçus et d'autres indications des directions principales, qui clignotent alternativement.
